# FASCICULE DE BREVET EUROPEEN

(11) **EP 0 540 434 B1**
(45) Date de publication et mention de la délivrance du brevet: **16.08.1995**
(21) Numéro de dépôt: 92420381.3
(22) Date de dépôt: 27.10.1992
(51) Int. Cl.: F16B 37/14

(54) **Ecrou protecteur de bouton d'actionnement**
Schutzmutter für Betätigungsknopf
Protecting nut for a command button

(30) Priorité: 31.10.1991 FR 9113955
(43) Date de publication de la demande: 05.05.1993
(73) Titulaire: CROUZET Automatismes, 26000 Valence (FR)
(72) Inventeur: Dorey, Michel, F-26750 Saint Paul Les Romans (FR)
(74) Mandataire: de Beaumont, Michel

(56) Documents cités:
- EP-A- 0 153 487
- DE-A- 2 509 225
- GB-A- 1 263 548

## Description

La présente invention concerne un écrou protecteur de bouton d'actionnement, tel qu'un bouton d'actionnement de disjoncteur, et en particulier un écrou comprenant une membrane élastique venant recouvrir le bouton ou se serrer autour du bouton.

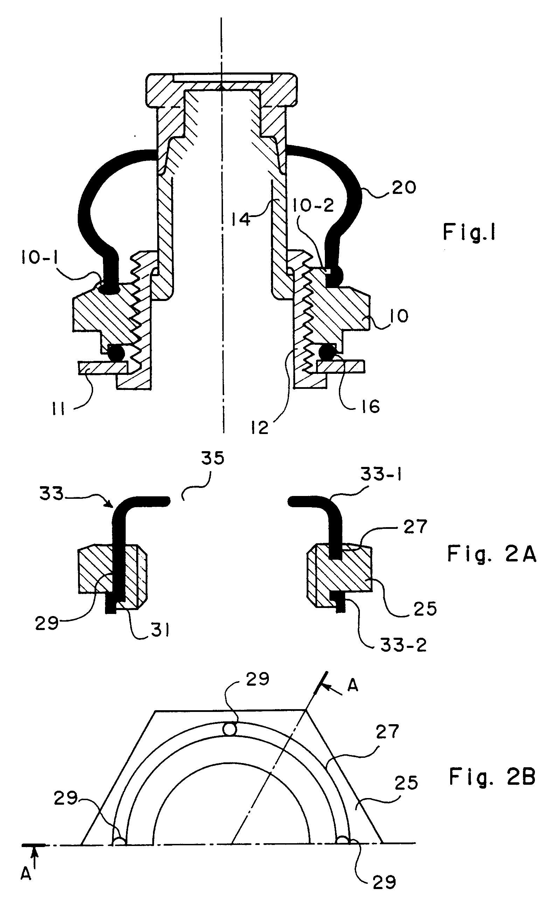

La figure 1 montre deux demi-vues en coupe d'un écrou protecteur classique de bouton de disjoncteur, deux modes de montage étant représentés dans les demi-vues. Un écrou 10, de fixation du disjoncteur sur une plaque 11, est vissé sur un canon 12 solidaire du corps du disjoncteur non représenté. Dans le canon 12 coulisse un bouton cylindrique d'actionnement 14. Pour assurer l'étanchéité entre les deux côtés de la plaque 11, on a prévu un joint torique 16 pressé entre la face inférieure de l'écrou 10 et la plaque. De plus, une membrane élastique 20 en forme de cloche est solidaire de la partie supérieure de l'écrou 10 et comprend un orifice central qui vient se serrer autour du bouton 14 par élasticité.

Dans la demi-vue de gauche de la figure 1, la membrane 20 est rendue solidaire de l'écrou par sertissage. Comme cela est représenté, une partie mince 10-1 de l'écrou 10 est déformée et vient pincer la base de la membrane 20. Dans la demi-vue de droite, la membrane 20 est rendue solidaire de l'écrou 10 par crochetage. Comme cela est représenté, la base de la membrane 20 est retenue par élasticité autour d'un épaulement extérieur 10-2 de l'écrou.

De tels écrous protecteurs ne sont pas pratiques à monter car on dispose initialement de trois pièces indépendantes (l'écrou 10, le joint 16 et la membrane 20). Les opérations de montage peuvent être tellement longues qu'elles peuvent coûter jusqu'à 2/3 du prix du disjoncteur. De plus, les trois pièces indépendantes de l'écrou protecteur ne sont généralement pas fournies par les mêmes fournisseurs, ce qui entraîne des gestions de stock fastidieuses.

Un objet de la présente invention est de réaliser un écrou protecteur particulièrement pratique à monter.

Un autre objet de la présente invention est de réaliser un écrou protecteur d'une seule pièce.

Ces objets sont atteints grâce à un écrou protecteur destiné à être vissé sur un canon dans lequel coulisse un bouton, comprenant une membrane élastique sensiblement en forme de cloche solidaire d'une face de l'écrou et venant se serrer autour du bouton, et un joint annulaire disposé sur la face opposée de l'écrou. La membrane et le joint forment une seule pièce et sont rendus solidaires à travers au moins un trou traversant l'écrou.

Selon un mode de réalisation de la présente invention, la base de la membrane en forme de cloche est disposée dans une rainure de l'écrou, dans laquelle débouchent lesdits trous.

Selon un mode de réalisation de la présente invention, le joint est muni d'un épaulement intérieur lui permettant d'être retenu par un épaulement extérieur de l'écrou.

Selon un mode de réalisation de la présente invention, la base de la membrane en forme de cloche est munie d'un épaulement intérieur lui permettant d'être retenue par un épaulement extérieur de l'écrou.

Selon un mode de réalisation de la présente invention, le joint est disposé dans une rainure de l'écrou, dans laquelle débouchent lesdits trous.

Selon un mode de réalisation de la présente invention, la membrane comprend un orifice central destiné à être traversé par le bouton et de diamètre initial inférieur à celui du bouton.

Selon un mode de réalisation de la présente invention, la membrane et le joint sont obtenus simultanément par surmoulage de l'écrou avec une seule introduction de produit de moulage.

Selon un mode de réalisation de la présente invention, un produit permettant d'améliorer l'adhérence est disposé dans la rainure avant le moulage.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1, précédemment décrite, représente deux variantes classiques d'écrou protecteur monté sur un bouton de disjoncteur ;
les figures 2A et 2B représentent respectivement une section selon une ligne A-A et une demi-vue de dessus d'un mode de réalisation d'écrou protecteur selon la présente invention ;
la figure 3 représente l'écrou protecteur des figures 2A et 2B monté sur un bouton de disjoncteur ;
la figure 4 illustre un procédé de fabrication d'un écrou protecteur selon la présente invention ; et
la figure 5 illustre une variante du mode de réalisation de la figure 2A.

Aux figures 2A et 2B, un écrou 25 selon la présente invention comprend une rainure annulaire 27 sur sa face supérieure et une pluralité de trous 29 (on a représenté 4 à 90°) reliant le fond de la rainure 27 à la face inférieure de l'écrou. Une extension centrale de la face inférieure de l'écrou 25 comporte, comme cela est représenté, un épaulement extérieur 31 en contre-dépouille face auquel débouchent les trous 29.

Une membrane souple 33 comprend une partie supérieure 33-1 en forme de cloche s'étendant à partir de la rainure 27 et présentant un orifice central 35. L'orifice 35 est de diamètre inférieur au diamètre du bouton sur lequel l'écrou doit être monté afin que la membrane se serre autour du bouton par élasticité. La membrane 33 comporte une partie inférieure 33-2 de section en L renversé adaptée à la forme de l'épaulement 31, débordant de la limite inférieure de l'écrou 25 et reliée à la partie supérieure 33-1 à travers les trous 29.

Avec cette configuration, la partie supérieure 33-1 joue le même rôle que la membrane 20 de la figure 1 et la partie inférieure 33-2 joue le rôle du joint 16 de la figure 1, et ces deux parties forment une seule et unique pièce avec l'écrou 25.

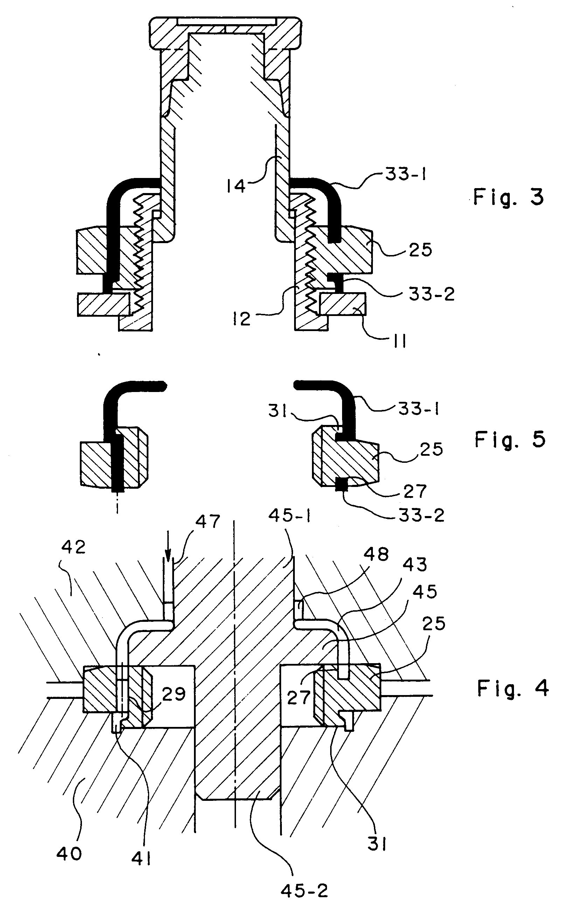

La figure 3 représente l'écrou des figures 2A et 2B monté sur un bouton de disjoncteur. On retrouve des mêmes éléments qu'à la figure 1 désignés par des mêmes références. On remarquera que la disposition est similaire à celle de l'écrou de la figure 1, et on pourra s'attendre à une même étanchéité.

La figure 4 illustre une vue en coupe de l'écrou 25 inséré dans un moule prêt à recevoir un produit liquide destiné à former la membrane 33. Le moule comprend un demi-moule inférieur 40 adapté à la forme de la partie inférieure de l'écrou 25 et dans lequel est formée une empreinte 41 pour la partie inférieure 33-2 de la membrane 33. Un demi-moule supérieur 42 s'appuie sur la face supérieure de l'écrou 25 et délimite l'extérieur d'une empreinte 43 pour la partie supérieure 33-1 de la membrane 33. Un noyau central 45 venant s'appuyer également sur la face supérieure de l'écrou 25 délimite l'intérieur de l'empreinte 43. Ce noyau comprend un axe supérieur 45-1 de centrage du noyau dans le demi-moule supérieur et un axe inférieur 45-2 de centrage du noyau dans le demi-moule inférieur. Un canal d'injection 47 arrive entre l'axe supérieur 45-1 et le demi-moule 42 à une chambre annulaire 48 entourant l'axe supérieur et communicant avec la partie supérieure centrale de l'empreinte 43.

Un produit de moulage en élastomère qui polymérise pour former la membrane élastique 33, est injecté par le canal 47, remplit l'empreinte 43, les trous 29 puis l'empreinte 41. L'air est évacué par le jeu entre les demi-moules et l'écrou 25. Ensuite, le moule est ouvert et le noyau 45 peut être retiré par l'orifice 35 (figure 2A) grâce à l'élasticité de la membrane 33.

Un avantage de ce procédé de moulage est qu'on obtient, par une seule injection de produit de moulage, les deux parties de la membrane 33 solidaires entre elles et de l'écrou 25. Ce procédé est au plus aussi complexe que le procédé d'obtention de la seule membrane 20 de la figure 1. Une double injection pour obtenir séparément les deux parties de la membrane serait envisageable mais plus complexe à réaliser.

Pour améliorer l'adhérence entre la partie supérieure 33-1 de la membrane 33 et la rainure 27, cette rainure 27 peut être soumise à un traitement la rendant rugueuse ou particulièrement adhérente pour le matériau constituant la membrane 33.

La figure 5 illustre une variante du mode de réalisation de la figure 2A. On y retrouve des mêmes éléments désignés par des mêmes références. Cette variante diffère du mode de réalisation de la figure 2A par le fait que l'écrou 25 a été retourné avant moulage. Comme cela est représenté, la base de la partie supérieure 33-1 de la membrane 33 se retrouve retenue par l'épaulement 31 et la partie inférieure 33-2 se retrouve dans la rainure 27.

Pour simplifier davantage la fabrication au détriment du maintien de la partie supérieure 33-1, l'écrou 25 peut être dépourvu de l'épaulement 31 et de la rainure 27, et comporter des extrémités cylindriques autour desquelles sont disposées les parties 33-1 et 33-2.

De nombreuses variantes et modifications de la présente invention apparaîtront à l'homme de l'art, notamment il peut choisir à sa convenance le nombre de trous 29 ou le matériau de la membrane 33. Il peut également envisager de réaliser une membrane 33 sans orifice central 35 en utilisant un noyau 45 détruit après moulage.

## Revendications

1. Ecrou protecteur (25) destiné à être vissé sur un canon (12) dans lequel coulisse un bouton (14), comprenant une membrane élastique (33-1) sensiblement en forme de cloche solidaire d'une face de l'écrou et venant se serrer autour du bouton ou recouvrant le bouton, et un joint annulaire disposé sur la face opposée de l'écrou, caractérisé en ce que la membrane et le joint (33-2) forment une seule pièce, la membrane et le joint étant rendus solidaires à travers au moins un trou (29) traversant l'écrou.

2. Ecrou protecteur selon la revendication 1, caractérisé en ce que la base de la membrane en forme de cloche (33-1) est disposée dans une rainure (27) de l'écrou, dans laquelle débouchent lesdits trous (29).

3. Ecrou protecteur selon la revendication 1, caractérisé en ce que le joint (33-2) est muni d'un épaulement intérieur lui permettant d'être retenu par un épaulement extérieur (31) de l'écrou.

4. Ecrou protecteur selon la revendication 1, caractérisé en ce que la base de la membrane en forme de cloche (33-1) est munie d'un épaulement intérieur lui permettant d'être retenue par un épaulement extérieur (31) de l'écrou.

5. Ecrou protecteur selon la revendication 1, caractérisé en ce que le joint (33-2) est disposé dans une rainure (27) de l'écrou, dans laquelle débouchent lesdits trous (29).

6. Ecrou protecteur selon la revendication 1, caractérisé en ce que la membrane (33-1) comprend un orifice central (35) destiné à être traversé par le bouton (14) et de diamètre initial inférieur à celui du bouton.

7. Ecrou protecteur selon la revendication 1, caractérisé en ce que la membrane (33-1) et le joint (33-2) sont obtenus simultanément par surmoulage de l'écrou (25) avec une seule introduction de produit de moulage.

8. Ecrou protecteur selon la revendication 7, caractérisé en ce qu'un produit permettant d'améliorer l'adhérence est disposé dans la rainure (27) avant le moulage.

## Claims

1. A protection nut (25) for screwing on a stud (12) in which a button (14) slides, comprising an approximately bell-shaped elastic membrane (33-1) mounted to one face of the nut and fitted around or covering the button and an annular seal-ring mounted to the opposite face of the nut, characterized in that the membrane and the seal-ring (33-2) form only one part, the membrane and the seal-ring being connected together through at least one through-hole of the nut.

2. A protection nut as claimed in claim 1, characterized in that the base of the bell-shaped membrane (33-1) is fitted in a groove (27) of the nut, in which said holes (29) open.

3. A protection nut as claimed in claim 1, characterized in that the seal-ring (33-2) is provided with an interior shoulder allowing it to be retained by an exterior shoulder (31) of the nut.

4. A protection nut as claimed in claim 1, characterized in that the base of the bell-shaped membrane (33-1) is provided with an interior shoulder allowing it to be retained by an exterior shoulder (31) of the nut.

5. A protection nut as claimed in claim 1, characterized in that the seal-ring (33-2) is fitted in said groove (27) of the nut in which said holes (29) open.

6. A protection nut as claimed in claim 1, characterized in that said membrane (33-1) comprises a central orifice (35) through which said button (14) is meant to pass and having an initial diameter smaller than that of the button.

7. A protection nut as claimed in claim 1, characterized in that said membrane (33-1) and said seal-ring (33-2) are simultaneously obtained by only one introduction of moulding material in a mould containing said nut (25).

8. A protection nut as claimed in claim 7, characterized in that a material for improving adherence is put in the groove (27) before moulding.

## Patentansprüche

1. Schutzmutter (25) zum Schrauben auf einen Ansatz, Stummel oder Bolzen (12) in dem ein Knopf (14) gleitet, wobei die Mutter folgendes aufweist: eine ungefähr glockenförmige elastische Membran (33-1), die an einer Seite der Mutter angebracht ist und um den Knopf herumgepaßt ist oder diesen abdeckt und einen ringförmigenDichtring, der an der gegenüberliegenden Seite der Mutter angebracht ist,
dadurch **gekennzeichnet,** daß die Membran und der Dichtring (33-2) nur ein Teil bilden, wobei die Membran und der Dichtring miteinander verbunden sind durch mindestens ein hindurchgehendes Loch der Mutter.

2. Schutzmutter nach Anspruch 1, dadurch gekennzeichent, daß die Basis der glockenförmigen Membran (33-1) in eine Nut (27) der Mutter eingepaßt ist, in die sich die Löcher (29) öffnen.

3. Schutzmutter nach Anspruch 1, dadurch gekennzeichnet, daß der Dichtring (33-2) mit einer Innenschulter versehen ist, die es ihm erlaubt, durch eine Außenschulter (31) der Mutter gehalten zu werden.

4. Schutzmutter nach Anspruch 1, dadurch gekennzeichnet, daß die Basis der glockenförmigen Membran (33-1) mit einer Innenschulter versehen ist, die es ihr erlaubt durch eine Außenschulter (31) der Mutter gehalten zu werden.

5. Schutzmutter nach Anspruch 1, dadurch gekennzeichnet, daß der Dichtring (33-2) in die Nut (27) der Mutter gepaßt ist, in die sich die Löcher (29) öffnen.

6. Schutznmutter nach Anspruch 1, dadurch gekennzeichnet, daß die Membran (33-1) eine mittlere Zumeßöffnung (35) aufweist, durch die der Knopf (14) hindurchgehen soll und die einen Anfangsdurchmesser besitzt, der kleiner ist als der des Knopfes.

7. Schutzmutter nach Anspruch 1 dadurch gekennzeichnet, daß die Membran (33-1) und der Dichtring (33-2) simultan erhalten werden, und zwar durch nur einmaliges Einführen eines Formmaterials in eine Form, die die Mutter (25) enthält.

8. Schutzmutter nach Anspruch 7, dadurch gekennzeichnet, daß ein Material zum Verbessern der Haftkraft in die Nut (27) getan wird, und zwar vor dem Formen.
